# EUROPEAN PATENT SPECIFICATION

(11) **EP 4 300 067 B1**
(45) Date of publication and mention of the grant of the patent: **16.04.2025**
(21) Application number: 22181254.8
(22) Date of filing: 27.06.2022
(51) Int. Cl.: G01M 17/02

(54) **APPARATUS AND METHOD FOR SIMULATING THE TYRE BEHAVIOR IN A PLUNGER TEST**
VORRICHTUNG UND VERFAHREN ZUR SIMULATION DES REIFENVERHALTENS IN EINEM KOLBENTEST
APPAREIL ET PROCÉDÉ POUR SIMULER LE COMPORTEMENT D'UN PNEU DANS UN TEST DE PISTON

(43) Date of publication of application: 03.01.2024
(73) Proprietor: Bridgestone Europe NV/SA, 1930 Zaventem (BE)
(72) Inventor: Marcello, Roberto, 00128 Roma (IT)
(74) Representative: Marchetti, Alessio

(56) References cited:
- KR-A- 20120 092 965

## Description

### TECHNICAL FIELD

The present invention relates to an apparatus and a method for substituting a tyre in a tyre strength test and simulating its physical behavior during the same.

### BACKGROUND

The tyre strength test or "plunger test" is one of the several mandatory test requirements a tyre has to pass according to specific national regulations to receive the necessary governmental certification and be released to the market.

The DOT FMVSS 139 for the United States of America is one example of such regulations.

During the tyre strength test or "plunger test" the force applied to the tyre at the center of the tread width through a plunger rod and the displacement due to tire deformation are measured by the tyre strength test machine or plunger test machine until the tyre breaks for a puncture caused by the plunger rod.

At that breaking point the energy applied to break the tyre is calculated with a formula given by the regulation: Energy = force x displacement divided by 2.

Depending on the energy required to break the tyre, the tyre will pass or fail the tyre strength test or "plunger test".

As is immediately evident, the tyre strength test or "plunger test" is a destructive test, because at the end of the test the tyre will be broken since it suffered a puncture and must be disposed, accordingly it cannot be used any longer or even a second time.

This poses a drawback when different test machines (and consequently their test results) need to be correlated with each other or even when the performance stability of the same machine needs to be monitored.

There is therefore an increasing need to find an alternative to the usage of a real tyre in these kind of tests so to be able to repeatedly and comparably reproduce the same behavior of a tyre over time and with different machines.

KR20120092965A discloses a tyre tread strength and bead deviation testing apparatus, and more particularly, a tyre tread strength and bead tread test which can be performed simultaneously in a single tester, while automatically measuring and measuring the load and displacement to be tested.

### DESCRIPTION OF THE INVENTION

The present invention provides an apparatus for simulating a tyre behavior in a plunger test that is free from the above disadvantages of the prior art and that is, in particular, easy and inexpensive to implement.

The present invention further provides a method for simulating a tyre behavior in a plunger test that is free from the above disadvantages of the prior art and that is, in particular, easy and inexpensive to implement.

According to this invention, an apparatus is provided for simulating a tyre behavior in a plunger test and a related method for simulating a tyre behavior in a plunger test, as set out in the appended claims.

The apparatus comprises a ground plate suitable for being firmly fixed to a plunger test machine, a supporting plate being movably connected to the ground plate by damping means, a pneumatic or hydraulic actuator being connected to the supporting plate and comprising an actuator piston, activating means suitable to trigger the discharge of the pneumatic or hydraulic cylinder, switching means suitable to engage the activating means when the supporting plate is being displaced.

The apparatus may further comprise guiding means connected to the ground plate guiding the supporting plate when it is being displaced.

The apparatus may further comprise a displacement gauge suitable to measure the relative displacement between the ground plate and the supporting plate.

The ground plate is suitable for being firmly fixed to a tyre supporting hub of a plunger test machine.

The ground plate is preferably fixed to a tyre supporting hub of a plunger test machine through fixing means.

The damping means connecting the supporting plate to the ground plate allow a displacement only along a preferred axis of translation.

The supporting plate is suitable for being moved along the preferred axis of translation when a displacement is applied to the actuator piston.

The ground plate and the supporting plate preferably have the same shape and dimension as well as the same surface area.

The pneumatic or hydraulic actuator connected to the supporting plate, is suitable for being filled with a compressed fluid when in operation.

The pneumatic or hydraulic actuator is a pneumatic cylinder.

The activating means may be connected to the ground plate. The activating means may be firmly connected to the ground plate.

The activating means are suitable to trigger the discharge of the compressed fluid in the pneumatic or hydraulic cylinder when activated.

The activating means may be mechanical activating means, e.g. a lever or optical activating means, e.g. a photocell.

The switching means may be connected to the supporting plate.

The apparatus may further comprise a positioning rod. The positioning rod may be connected to the ground plate. The activating means may be connected to the ground plate through the positioning rod. The positioning rod is suitable for positioning the activating means at different positions along the preferred axis of translation.

The damping means comprise at least a spring.

The damping means are preferably symmetrically distributed over the surface of the ground plate and the supporting plate.

The ground plate and the supporting plate preferably have a rectangular shape.

The damping means are preferably distributed on two distal sides of the surface of the ground plate and the supporting plate.

### BRIEF DESCRIPTION OF THE DRAWINGS

The present invention is now described with reference to the attached drawings, which illustrate several non-limiting exemplary embodiments, wherein:
Figure 1 is a prospective view of an apparatus for simulating a tyre behavior in a plunger test;
Figure 2 is a front view of the apparatus of Figure 1.
Figure 3 is a front view of the apparatus with the actuator piston in an extracted position and in contact with the plunger of the plunger test machine.
Figure 4 is a perspective view of the apparatus with the actuator piston in an extracted position, the plunger in a displaced position during the test and the switching means engaging the activating means.
FIG 5 is a side view of the apparatus of Figure 4.
FIG 6 shows the detail of Figure 5 in which the switching means is engaging the activating means.
FIG 7 exemplarily shows the force/displacement diagrams of two real tyres and the apparatus respectively.

### DETAILED DESCRIPTION OF THE DRAWINGS

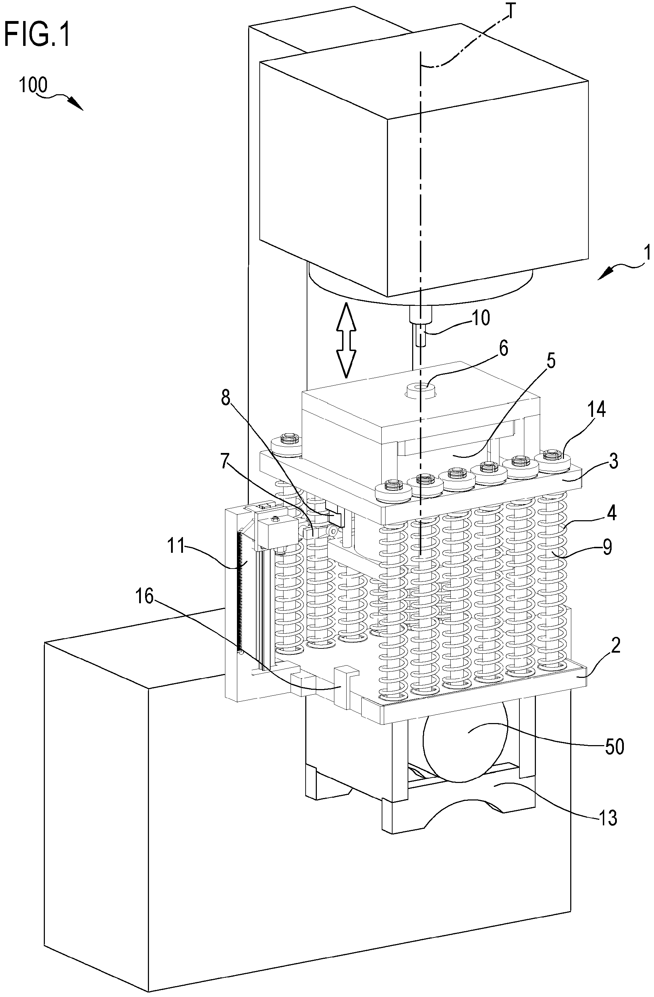

In Figure 1, the number 1 indicates in the entirety thereof, an apparatus for simulating a tyre behavior in a plunger test (also called a plunger test simulator tool).

The apparatus 1 is provided with a ground plate 2 that is firmly fixed to the tyre supporting hub 50 of the plunger test machine 100 (only schematically shown) through fixing means 13. The fixing means 13 are preferably elongated bars passing below the tyre supporting hub 50 and being fastened to the ground plate 2 preferably via screws, thereby fastening the tyre supporting hub 50 between the ground plate 2 and the elongated bars.

To guarantee measurement precision it is important that the ground plate 2 of the apparatus 1 is firmly fixed on the tyre supporting hub 50 of the plunger test machine 100 and that any movement of the ground plate 2 is inhibited.

The apparatus 1 further comprises a supporting plate 3 being movably connected to the ground plate 2 by damping means 4.

The damping means 4 extend from the upper surface of the ground plate 2 to the lower surface of the supporting plate 3.

The upper surface of the ground plate 2 and the lower surface of the supporting plate 3 are parallel to each other.

The supporting plate 3 is supported by the damping means 4.

The damping means 4 preferably comprise at least a spring.

The damping means 4 preferably comprise a plurality of springs.

In addition to supporting the supporting plate 3, the damping means 4 have the function of reproducing the vertical stiffness of a real tyre.

Specific calibration of the damping means 4 is required to reproduce real tyres of different sizes or, more in general, tyres of different categories (passenger vehicle tyres, commercial van tyres, truck tyres, etc.) as well as different inflation conditions.

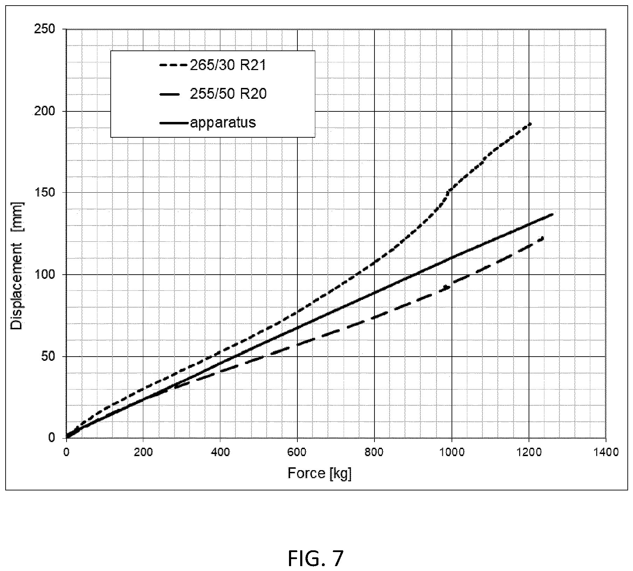

As can be seen in Fig. 7, during a plunger test the resulting displacement of the plunger 10 according to the force applied to the tyre are plotted. The average slope of the resulting graph is the vertical stiffness of a tyre and represents its spring constant k.

In Fig. 7 the solid line represents the plunger test results with the apparatus for simulating a tyre behavior in a plunger test whereas the dashed line shows the result on a real tyre of the size 255/50 R20 having a resulting spring constant of about 10.5 kg/mm and the dotted one the result of a real tyre of the size 265/30 R21 having a resulting spring constant of about 7.5 kg/mm. Both tyres were inflated at 2.0 bar. The spring constant of the damping means 4 is about 8.9 kg/mm.

With calibration of the damping means 4 it is meant that the total spring constant of the damping means 4 should represent the range of spring constants of a particular tyre type.

The table below shows possible ranges of spring constants of different tyre categories.

**Table I**

| Tyre category | Range of spring constant [kg/mm] |
|---|---|
| Passenger Vehicle Tyres | 5 ~ 12 |
| Commercial Van Tyres | 13 ~ 22 |
| Truck and Bus Tyres | 30 ~ 50 |

The damping means 4 should be calibrated and selected such that they can represent the vertical stiffness, i.e. the spring constant, of a category of tyres.

It also possible to reproduce the exact spring constant of a specific tyre size and specification once this is known.

In a preferred embodiment the damping means 4 consists of 12 single sprigs. Given the total spring constant k_{T} of the damping means 4 of 8.9 kg/mm, each single spring has a spring constant k_{S} of 0.74 kg/mm since in the embodiment shown in figures 1 to 5 the springs of the damping means 4 have a parallel configuration.

The damping means 4 are arranged symmetrically over the upper surface of the ground plate 2 and the lower surface of the supporting pate 3 in order to evenly distribute the load of the supporting plate as well as the load applied during the plunger test.

The symmetric distribution of the damping means 4 allows also that the upper surface of the ground plate 2 and the lower surface of the supporting plate 3 remain parallel during the displacement of the supporting plate 2.

Preferably the ground plate 2 and the supporting plate 3 are of rectangular shape and have the same dimensions, i.e. the upper surface of the ground plate 2 and the lower surface of the supporting plate 3 have the same surface area.

Preferably the damping means 4 are distributed on two distal sides of the upper surface of the ground plate and the lower surface of the supporting plate respectively.

The damping means 4 connecting the supporting plate 3 to the ground plate 2 preferably allow a displacement only along a preferred axis of translation. The preferred axis of translation being orthogonal to both the upper surface of the ground plate 2 and the lower surface of the supporting plate 3.

To further assure the displacement of the supporting plate 3 only along the preferred axis of translation, the apparatus 1 preferably comprises guiding means 9.

The guiding means 9 extend in the preferred axis of translation and are fixedly connected with the ground plate 2.

The guiding means 9 are preferably rods or shafts, preferably with circular section.

Preferably the apparatus 1 comprises as many guiding means 9 as damping means 4.

Preferably the guiding means 9 and the damping means 4 are respectively coaxial, i.e. every single element of the guiding means 9 is coaxial to a single element of the damping means 4.

Preferably the guiding means 9 are located respectively axially inside the damping means 4, in other words each element of the damping means 4 surrounds an element of the guiding means 9.

The supporting plate 3 comprises at least one pass-through hole whose dimensions are such that the guiding means 9 can pass through it whereas the damping means 4 cannot.

The guiding means 9 comprise a limiting element 14 at its distal end from the ground plate 2. The limiting element 14 is located at the end of the guiding means 9 that passes through the pass-through hole in the supporting plate 3. The limiting element 14 is located on the opposite side of the supporting plate 3 than the damping means 4.

The limiting element 14 has firstly the function of securing the supporting plate 3 to the guiding means 9, or more precisely to secure that the supporting plate 3 would not move beyond the guiding means 9 and secondly of adjusting the initial compression of the damping means 4.

With initial compression of the damping means 4 it is meant the compression of the springs when no force is applied to the apparatus 1 via the plunger 10.

The limiting element 14 preferably comprises a ring and a bolt.

The limiting element 14 is preferably connected to the guiding means 9 via a thread.

The apparatus 1 further comprises a pneumatic or hydraulic actuator 5 being firmly connected to the supporting plate 3.

The pneumatic or hydraulic actuator 5 comprises an actuator piston 6.

The pneumatic or hydraulic actuator 5 is preferably a pneumatic or hydraulic cylinder.

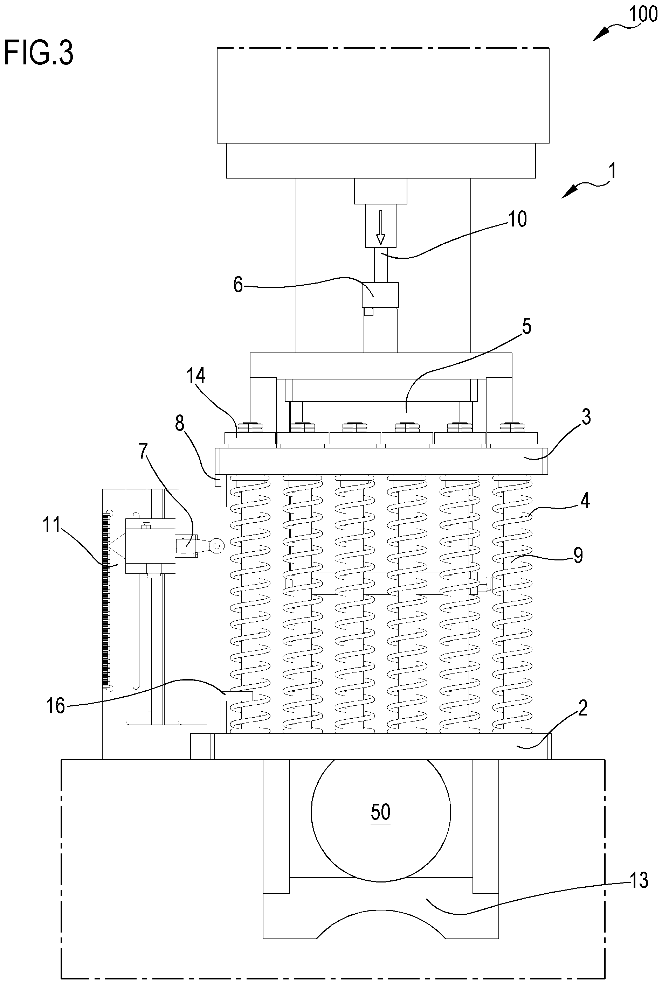

The pneumatic or hydraulic actuator 5 is suitable for being filled with a compressed fluid when in operation; when filled with the compressed fluid the pneumatic or hydraulic actuator 5 prompts the actuator piston 6 to translate in an extended position, as can be seen in figure 3.

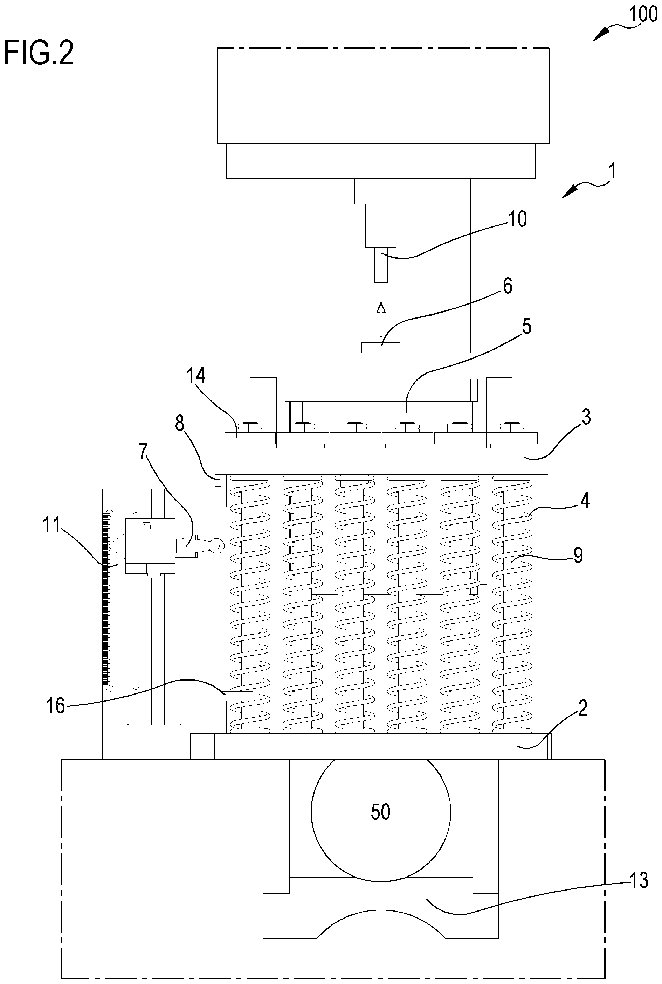

Vice-versa when the compressed fluid is discharged from the pneumatic or hydraulic actuator 5 the actuator piston 6 retracts in a retracted position, as can be seen in figures 1 or 2.

The translation axis T of the actuator piston 6 is parallel to the preferred axis of translation.

The apparatus 1 further comprises activating means 7 suitable to trigger the discharge of the pneumatic or hydraulic cylinder 5.

When the activating means 7 are engaged or activated, they prompt the the pneumatic or hydraulic actuator 5 to discharge the compressed fluid, thereby simulating the breakage of the tyre.

The activating means 7 are preferably mechanical activating means 7, e.g. a lever, or optical activating means 7, e.g. a photocell.

The activating means 7 are preferably connected to the ground plate 2.

The apparatus 1 may further comprise a positioning rod 11. The positioning rod is preferably connected to the ground plate 2.

The activating means 7 are preferably connected to the ground plate 2 through the positioning rod 11.

The positioning rod 11 is suitable for positioning the activating means 7 at different positions or heights along the preferred axis of translation T.

The apparatus 1 further comprises switching means 8 suitable to engage the activating means 7 when the supporting plate 3 is being displaced.

The switching means 8 are preferably connected to the supporting plate 3.

The positioning of the activating means 7 at different positions or heights allows to select the displacement of the supporting plate 3 at which the switching means 8 will engage the activating means 7 and consequently the apparatus 1 will simulate the tyre breakage.

The apparatus 1 may further comprise a displacement gauge 16 for measuring the displacement between the ground plate 2 and the supporting plate 3 during the plunger test.

The apparatus 1 may further comprise a load cell 17 (not shown in the figures) positioned on the outer end of the actuator piston 6, between the actuator piston 6 and the plunger 10.

The load cell 17 is suitable for measuring the applied force on the apparatus 1 simulating the behavior of a tyre during the plunger test.

The measurement of the applied force via the load cell 17 and the displacement between the ground plate 2 and the supporting plate 3 will provide a way to calculate the energy required to break the tyre during the plunger test.

The measurement of force and displacement via the load cell 17 and the displacement gauge 16 will provide comparative data in addition or in substitution of those measured by the plunger test machine itself. The additional comparative dataset can be used also to check the proper function of the plunger test machine.

In operation, the apparatus 1 is mounted on the tyre supporting hub 50 of a plunger test machine 100; the pneumatic or hydraulic actuator 5 is filled with a compressed fluid, this prompts the actuator piston 6 to translate in its extended position. Before starting the plunger test, the plunger 10 of the plunger test machine 100 is pushed against the actuator piston 6 as can be seen in Figure 3.

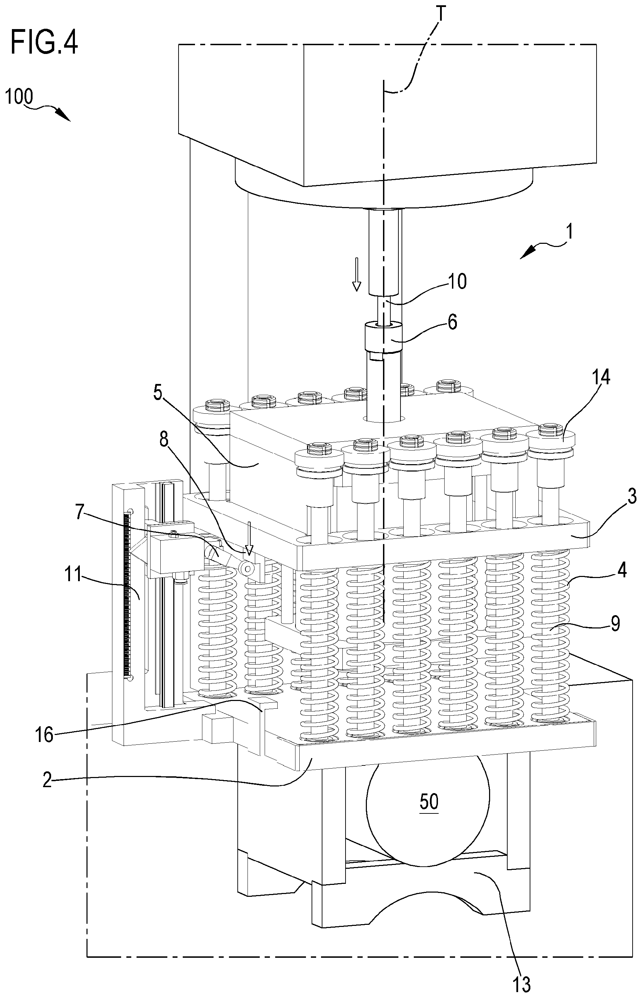

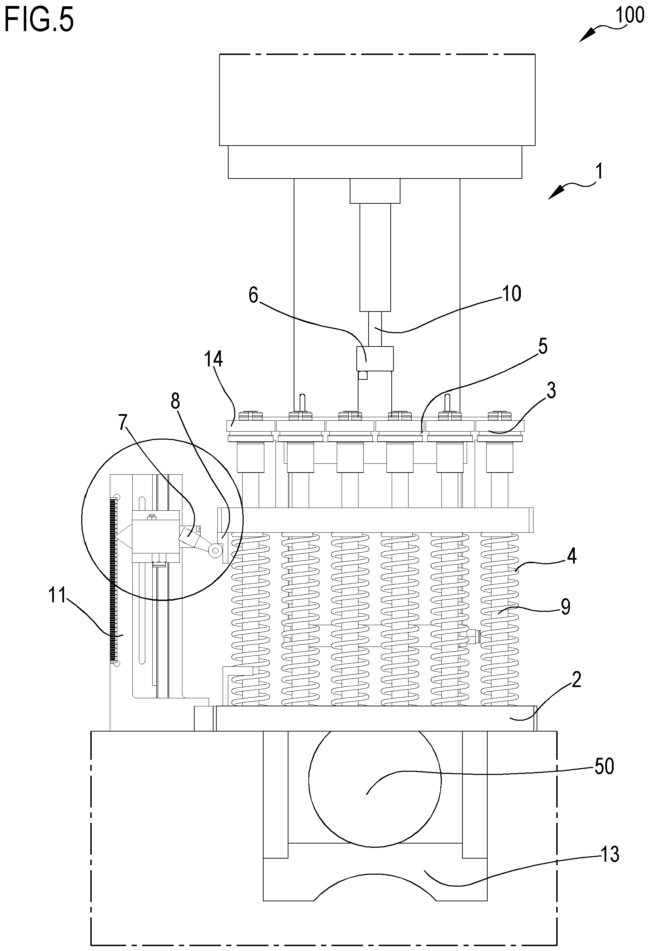

During the plunger test procedure a force is applied to the plunger 10 of the machine that consequently displaces the actuator piston 6 and the pneumatic or hydraulic actuator 5 as can be seen in Figures 4 and 5.

Being the pneumatic or hydraulic actuator 5 firmly connected to the supporting plate 3, the supporting plate 3 is pushed downwards, i.e. along the preferred axis of translation towards the ground plate 2.

The damping means 4 are thereby compressed.

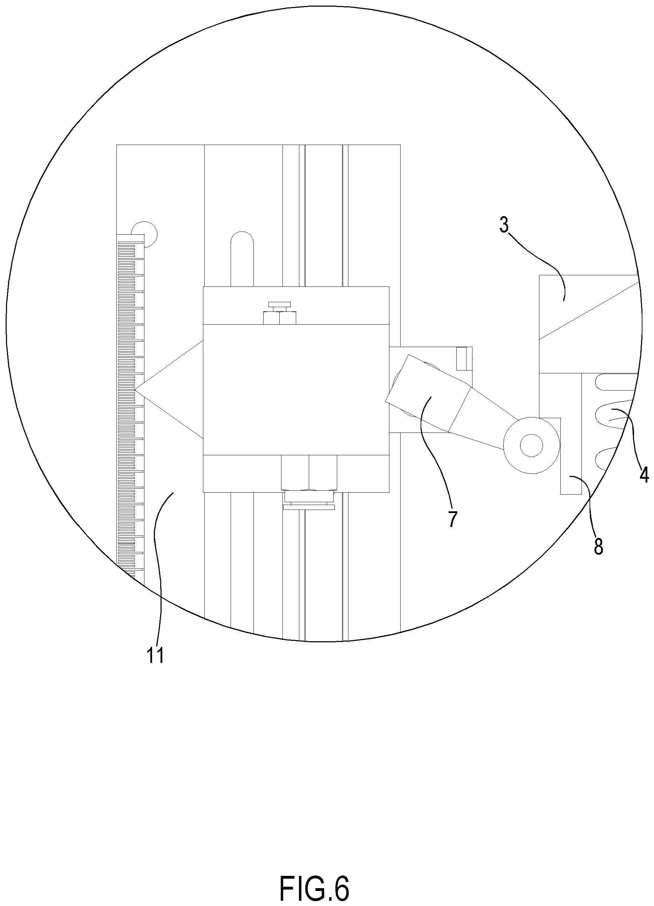

At a predetermined height the switching means 8 positioned on the supporting plate 3 will engage with the activating means 7 (as can be seen in Figures 5 and 6) thereby triggering the discharge of the compressed fluid from the pneumatic or hydraulic actuator 5 and simulating the breakage of the tyre.

A method for simulating a tyre behavior during a plunger test is also provided by this invention.

The method comprises using the apparatus 1 instead of a real tyre during a plunger test.

The method comprising the steps of mounting the apparatus 1 onto the tyre supporting hub 50 of a plunger test machine 100; filling the pneumatic or hydraulic actuator 5 with a compressed fluid, thereby prompting the actuator piston 6 to translate in its extended position; pushing the plunger 10 of the plunger test machine 100 against the actuator piston 6; starting the plunger test applying a force to the plunger 10; displacing the supporting plate 3 via the force applied to the actuator piston 6 until the switching means 8 will engage the activating means 7 thereby triggering the discharge of the compressed fluid from the pneumatic or hydraulic actuator 5 and simulating the breakage of the tyre.

The method may further comprise the steps of applying a load cell 17 between the actuator piston 6 and the plunger 10; measuring the applied force and the displacement between the ground plate 2 and the supporting plate 3 during the test; calculating the energy at which the simulation of the tyre breakage occurs.

### LIST OF REFERENCE NUMBERS IN THE FIGURES

- 1: apparatus
- 2: ground plate
- 3: supporting plate
- 4: damping means
- 5: pneumatic or hydraulic actuator
- 6: actuator piston
- 7: activating means
- 8: switching means
- 9: guiding means
- 10: plunger
- 11: positioning rod

- 13: fixing means
- 14: limiting element
- 15: tyre supporting hub
- 16: displacement gauge
- 17: load cell
- 100: plunger test machine

- T: Preferred axis of translation

## Claims

1. Apparatus (1) for simulating a tyre behavior in a plunger test, comprising
- a ground plate (2) suitable for being firmly fixed to a tyre supporting hub (15) of a plunger test machine(100),
- a supporting plate (3) being movably connected to the ground plate (2) by damping means (4), wherein the damping means (4) allow a displacement only along a preferred axis of translation (T),
- a pneumatic or hydraulic actuator (5) being connected to the supporting plate (3), wherein the pneumatic or hydraulic actuator (5) is suitable for being filled with a compressed fluid when in operation and wherein the pneumatic or hydraulic actuator (5) comprises an actuator piston (6),
- activating means (7) being connected to the ground plate (2) and suitable to trigger the discharge of the compressed fluid in the pneumatic or hydraulic actuator (5) when activated,
- switching means (8) connected to the supporting plate (3) suitable to engage the activating means (7) when the supporting plate (3) is being displaced,
wherein the supporting plate (3) is suitable to being moved along the preferred axis of translation (T) when a force is applied to the actuator piston (6),
wherein the activating means (7) are configured to allow positioning at different positions or heights to select the displacement of the supporting plate (3) at which the switching means (8) engage the activating means (7) to simulate a tyre breakage..

2. Apparatus according to claim 1 further comprising a positioning rod connected to the ground plate wherein the activating means are connected to the ground plate through the positioning rod, and wherein the positioning rod is suitable for positioning the activating means at different positions along the preferred axis of translation.

3. Apparatus according to any preceding claim wherein the damping means comprise at least a spring.

4. Apparatus according to any preceding claim wherein the damping means are symmetrically distributed over the surface of the ground plate and the supporting plate.

5. Apparatus of claim 4 wherein the damping means are distributed on two distal sides of the surface of the ground plate and the supporting plate respectively.

6. Apparatus according to any preceding claim wherein the pneumatic or hydraulic actuator is a pneumatic cylinder.

7. Apparatus according to any preceding claim wherein the apparatus further comprises a displacement gauge for measuring the displacement of the supporting plate with respect to the ground plate.

8. Apparatus according to any preceding claim wherein the apparatus further comprises a load cell connected to the actuator piston for measuring the applied force on the actuator piston.

9. Apparatus according to any of previous claims wherein the damping means have a spring constants in one of the ranges 5 to12 kg/mm, 13 to 22 kg/mm or 30 to 50 kg/mm.

10. Method for performing a plunger test on a plunger test machine using the apparatus of any preceding claims comprising the steps of:
- fixing the apparatus to a supporting hub of the plunger test machine,
- filling the pneumatic or hydraulic actuator with a fluid, wherein the actuator rod is thereby lifted towards a plunger of the plunger test machine,
- starting the plunger test by applying trough the plunger a force onto the actuator piston causing the supporting plate to displace along a preferred axle of translation,
- ending the test when the switching means engage the activating means due to the displacement of the supporting plate.

11. Method of claim 10 further comprising the steps of:
- measuring the displacement of the supporting plate via a displacement gauge,
- measuring the force applied to the plunger via the load cell and
- calculating the energy at which the simulation of tyre breakage occurs.

12. Method of claim 11 further comprising the step of selecting the damping means within one of the group of damping means having spring constants in the ranges 5 to 12 kg/mm, 13 to 22 kg/mm or 30 to 50 kg/mm.

## Patentansprüche

1. Einrichtung (1) zum Simulieren eines Reifenverhaltens in einem Kolbentest, umfassend
- eine Grundplatte (2), die geeignet ist, um an einer Reifenstütznabe (15) einer Kolbentestmaschine (100) fest fixiert zu werden,
- eine Stützplatte (3), die durch Dämpfungsmittel (4) mit der Grundplatte (2) bewegbar verbunden ist, wobei die Dämpfungsmittel (4) eine Verschiebung nur entlang einer bevorzugten Translationsachse (T) ermöglichen,
- einen pneumatischen oder hydraulischen Aktor (5), der mit der Stützplatte (3) verbunden ist, wobei der pneumatische oder hydraulische Aktor (5) geeignet ist, um mit einem Druckfluid gefüllt zu werden, wenn er in Betrieb ist, und wobei der pneumatische oder hydraulische Aktor (5) einen Aktorkolben (6) umfasst,
- Aktivierungsmittel (7), die mit der Grundplatte (2) verbunden sind und geeignet sind, um die Abgabe des Druckfluids in dem pneumatischen oder hydraulischen Aktor (5) auszulösen, wenn sie aktiviert werden,
- Schaltmittel (8), die mit der Stützplatte (3) verbunden sind, die geeignet sind, um die Aktivierungsmittel (7) in Eingriff zu nehmen, wenn die Stützplatte (3) verschoben wird,
wobei die Stützplatte (3) geeignet ist, um entlang der bevorzugten Translationsachse (T) bewegt zu werden, wenn eine Kraft auf den Aktorkolben (6) ausgeübt wird,
wobei die Aktivierungsmittel (7) konfiguriert sind, um ein Positionieren in unterschiedlichen Positionen oder Höhen zu ermöglichen, um die Verschiebung der Stützplatte (3) auszuwählen, bei der die Schaltmittel (8) die Aktivierungsmittel (7) in Eingriff nehmen, um einen Reifenbruch zu simulieren.

2. Einrichtung nach Anspruch 1, ferner umfassend eine Positionierungsstange, die mit der Grundplatte verbunden ist, wobei die Aktivierungsmittel mittels der Positionierungsstange mit der Grundplatte verbunden sind und wobei die Positionierungsstange zum Positionieren der Aktivierungsmittel an unterschiedlichen Positionen entlang der bevorzugten Translationsachse geeignet ist.

3. Einrichtung nach einem der vorstehenden Ansprüche, wobei die Dämpfungsmittel mindestens eine Feder umfassen.

4. Einrichtung nach einem der vorstehenden Ansprüche, wobei die Dämpfungsmittel über die Oberfläche der Grundplatte und der Stützplatte symmetrisch verteilt sind.

5. Einrichtung nach Anspruch 4, wobei die Dämpfungsmittel auf zwei distalen Seiten der Oberfläche der Grundplatte beziehungsweise der Stützplatte verteilt sind.

6. Einrichtung nach einem der vorstehenden Ansprüche, wobei der pneumatische oder hydraulische Aktor ein pneumatischer Zylinder ist.

7. Einrichtung nach einem der vorstehenden Ansprüche, wobei die Einrichtung ferner ein Verschiebungsmessinstrument zum Messen der Verschiebung der Stützplatte in Bezug auf die Grundplatte umfasst.

8. Einrichtung nach einem der vorstehenden Ansprüche, wobei die Einrichtung ferner eine Kraftmessdose, die mit dem Aktorkolben verbunden ist, zum Messen der ausgeübten Kraft auf dem Aktorkolben umfasst.

9. Einrichtung nach einem der vorstehenden Ansprüche, wobei die Dämpfungsmittel eine Federkonstante in einem der Bereiche von 5 bis 12 kg/mm, 13 bis 22 kg/mm oder 30 bis 50 kg/mm aufweisen.

10. Verfahren zum Durchführen eines Kolbentests auf einer Kolbentestmaschine unter Verwendung der Einrichtung nach einem der vorstehenden Ansprüche, umfassend die Schritte:
- Fixieren der Einrichtung an einer Stütznabe der Kolbentestmaschine,
- Füllen des pneumatischen oder hydraulischen Aktors mit einem Fluid, wobei die Aktorstange dadurch in Richtung eines Kolbens der Kolbentestmaschine gehoben wird,
- Starten des Kolbentests durch Ausüben einer Kraft mittels des Kolbens auf den Aktorkolben, wobei verursacht wird, dass sich die Stützplatte entlang einer bevorzugten Translationsachse verschiebt,
- Beenden des Tests, wenn die Schaltmittel aufgrund der Verschiebung der Stützplatte die Aktivierungsmittel in Eingriff nehmen.

11. Verfahren nach Anspruch 10, ferner umfassend die Schritte:
- Messen der Verschiebung der Stützplatte über ein Verschiebungsmessinstrument,
- Messen der Kraft, die auf den Kolben ausgeübt wird, über die Kraftmessdose und
- Berechnen der Energie, bei der die Reifenbruchsimulation erfolgt.

12. Verfahren nach Anspruch 11, ferner umfassend den Schritt eines Auswählens der Dämpfungsmittel im Rahmen eines der Gruppe von Dämpfungsmitteln, die Federkonstanten in den Bereichen von 5 bis 12 kg/mm, 13 bis 22 kg/mm oder 30 bis 50 kg/mm aufweisen.

## Revendications

1. Appareil (1) destiné à simuler un comportement de pneu dans un essai de résistance à la crevaison, comprenant
- une plaque de base (2) adaptée pour être solidement fixée à un moyeu de support (15) de pneu d'une machine d'essai de résistance à la crevaison (100),
- une plaque de support (3) reliée de manière mobile à la plaque de base (2) par des moyens d'amortissement (4), dans lequel les moyens d'amortissement (4) permettent un déplacement uniquement le long d'un axe de translation préféré (T),
- un actionneur pneumatique ou hydraulique (5) relié à la plaque de support (3), dans lequel l'actionneur pneumatique ou hydraulique (5) est adapté pour être rempli d'un fluide comprimé lorsqu'il fonctionne et dans lequel l'actionneur pneumatique ou hydraulique (5) comprend un piston d'actionneur (6),
- un moyen d'activation (7) relié à la plaque de base (2) et adapté pour déclencher la décharge du fluide comprimé dans l'actionneur pneumatique ou hydraulique (5) lorsqu'il est activé,
- un moyen de commutation (8) relié à la plaque de support (3) adapté pour venir en prise avec le moyen d'activation (7) lorsque la plaque de support (3) est déplacée,
dans lequel la plaque de support (3) est adaptée pour être déplacée le long de l'axe de translation préféré (T) lorsqu'une force est appliquée au piston d'actionneur (6),
dans lequel le moyen d'activation (7) est configuré pour permettre un positionnement au niveau de différentes positions ou hauteurs afin de sélectionner le déplacement de la plaque de support (3) auquel le moyen de commutation (8) vient en prise avec le moyen d'activation (7) de manière à simuler une cassure de pneu.

2. Appareil selon la revendication 1, comprenant en outre une tige de positionnement reliée à la plaque de base, dans lequel le moyen d'activation est relié à la plaque de base par l'intermédiaire de la tige de positionnement, et dans lequel la tige de positionnement est adaptée pour positionner le moyen d'activation au niveau de différentes positions le long de l'axe de translation préféré.

3. Appareil selon l'une quelconque revendication précédente, dans lequel les moyens d'amortissement comprennent au moins un ressort.

4. Appareil selon l'une quelconque revendication précédente, dans lequel les moyens d'amortissement sont répartis symétriquement sur la surface de la plaque de base et de la plaque de support.

5. Appareil selon la revendication 4, dans lequel les moyens d'amortissement sont répartis sur deux côtés distaux de la surface de la plaque de base et de la plaque de support, respectivement.

6. Appareil selon l'une quelconque revendication précédente, dans lequel l'actionneur pneumatique ou hydraulique est un cylindre pneumatique.

7. Appareil selon l'une quelconque revendication précédente, dans lequel l'appareil comprend en outre une jauge de déplacement destinée à mesurer le déplacement de la plaque de support par rapport à la plaque de base.

8. Appareil selon l'une quelconque revendication précédente, dans lequel l'appareil comprend en outre un mesureur de force relié au piston d'actionneur destiné à mesurer la force appliquée sur le piston d'actionneur.

9. Appareil selon l'une quelconque des revendications précédentes, dans lequel les moyens d'amortissement ont des constantes de ressort comprises dans l'une des plages allant de 5 à 12 kg/mm, de 13 à 22 kg/mm ou de 30 à 50 kg/mm.

10. Procédé destiné à effectuer un essai de résistance à la crevaison sur une machine d'essai de résistance à la crevaison à l'aide de l'appareil selon des quelconques revendications précédentes, comprenant les étapes consistant à :
- fixer l'appareil à un moyeu de support de la machine d'essai de résistance à la crevaison,
- remplir l'actionneur pneumatique ou hydraulique d'un fluide, dans lequel la tige d'actionneur est ainsi soulevée vers un piston plongeur de la machine d'essai de résistance à la crevaison,
- démarrer l'essai de résistance à la crevaison en appliquant, à travers le piston plongeur, une force sur le piston d'actionneur, amenant la plaque de support à se déplacer le long d'un axe de translation préféré,
- mettre fin à l'essai lorsque le moyen de commutation vient en prise avec le moyen d'activation en raison du déplacement de la plaque de support.

11. Procédé selon la revendication 10 comprenant en outre les étapes consistant à :
- mesurer le déplacement de la plaque de support par l'intermédiaire d'une jauge de déplacement,
- mesurer la force appliquée au piston plongeur par l'intermédiaire du mesureur de force et
- calculer l'énergie à laquelle la simulation d'une cassure de pneu se produit.

12. Procédé selon la revendication 11 comprenant en outre l'étape consistant à sélectionner les moyens d'amortissement à l'intérieur d'un groupe de moyens d'amortissement ayant des constantes de ressort comprises dans la plage allant de 5 à 12 kg/mm, de 13 à 22 kg/mm ou de 30 à 50 kg/mm.
